Europäisches Patentamt

European Patent Office

Office européen des brevets

(11) Veröffentlichungsnummer: **0 418 536 A2**

# EUROPÄISCHE PATENTANMELDUNG

(21) Anmeldenummer: **90115272.8**

(22) Anmeldetag: **09.08.90**

(51) Int. Cl.5: **B60Q 1/28**

Die Bezeichnung der Erfindung wurde geändert (Richtlinien für die Prüfung im EPA, A-III, 7.3).

(30) Priorität: **20.09.89 DE 8911189 U**

(43) Veröffentlichungstag der Anmeldung:
**27.03.91 Patentblatt 91/13**

(84) Benannte Vertragsstaaten:
**DE FR GB IT NL**

(71) Anmelder: **MAN Nutzfahrzeuge
Aktiengesellschaft
Dachauer Strasse 667 Postfach 50 06 20
W-8000 München 50(DE)**

(72) Erfinder: **Holger, Koos
Deisenhofener Strasse 40
W-8000 München 90(DE)**

(54) **Blinkleuchte, in Fahrerkabinensäule integriert.**

(57) Die Erfindung zeigt das Fahrerhaus eines Lkw's mit Bugfenster (3) und Seitenfenstern (4), die durch eine Strebe (2) verbunden sind. Im unteren Bereich der Strebe (2) ist eine Blinkleuchte (1) flächenbündig mit ihr angeordnet.

EP 0 418 536 A2

**BLINKLEUCHTEN SIND ÜBLICHERWEISE AM BUG ETWA OBERHALB DER STOSSSTANGE ANGEORDNET.**

Der Neuerung liegt die Aufgabe zugrunde, die Sicherheit im Straßenverkehr zu verbessern.

Dies wird neuerungsgemäß dadurch erreicht, daß in den tragenden Streben zwischen dem Bugfenster und den Seitenfenstern Blinkleuchten flächenbündig mit den Streben angeordnet sind. Indem die Blinkleuchten aus der Stoßstangenzone herausverlagert werden, sind sie auch nicht mehr einer so unmittelbaren Beschädigung bei einer Kollision ausgesetzt. Des weiteren sind sie, im Strebenbereich angeordnet, für den fließenden Verkehr sehr viel besser sichtbar. Indem sie flächenbündig in die Strebe eingebunden sind, sind sie auch nicht der Beschädigungsgefahr unterlegen, die zwangsläufig ein herausragendes Teil gilt. Die Neuerung ist an einem Ausführungsbeispiel näher beschrieben.

Die Fig. zeigt eine Fahrerkabine eines Lkw's in der Perspektive.

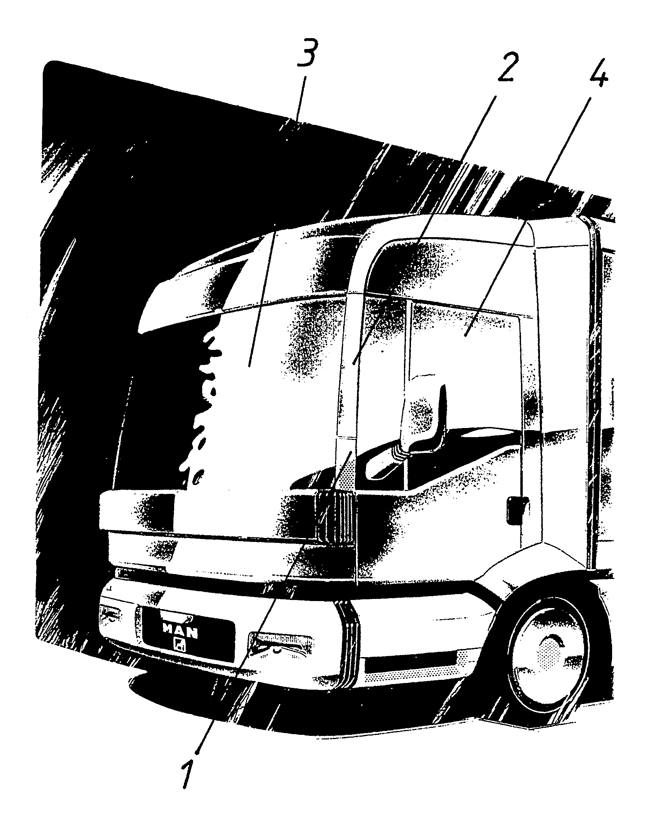

In der Figur ist das Fahrerhaus eines Lkw's mit Bugfenster 3 und Seitenfenstern 4, die durch eine Strebe 2 verbunden sind, dargestellt. Im unteren Bereich der Strebe 4 ist eine Blinkleuchte 1 flächenbündig mit ihr angeordnet.

**Ansprüche**

1. Nutzfahrzeug, insbesondere Lkw, dadurch gekennzeichnet, daß in den tragenden Streben (2) zwischen dem Bugfenster (3) und den Seitenfenstern (4) Blinkleuchten (1) flächenbündig mit den Streben (2) angeordnet sind.

2. Nutzfahrzeug nach Anspruch 1, dadurch gekennzeichnet, daß die Blinkleuchte (1) im unteren Bereich der Strebe (2) angeordnet ist.